# EUROPÄISCHE PATENTSCHRIFT

(11) **EP 3 082 394 B1**
(45) Veröffentlichungstag und Bekanntmachung des Hinweises auf die Patenterteilung: **11.04.2018**
(21) Anmeldenummer: 14830504.8
(22) Anmeldetag: 05.12.2014
(51) Int. Cl.: A01C 11/02

(54) **PFLANZMASCHINE ZUM SETZEN VON PFLANZEN, INSBESONDERE REBEN**
PLANTING MACHINE FOR PLACING PLANTS, IN PARTICULAR VINES
MACHINE À PLANTER DESTINÉE À LA MISE EN PLACE DE PLANTES, EN PARTICULIER DE VIGNES

(30) Priorität: 18.12.2013 DE 102013114356
(43) Veröffentlichungstag der Anmeldung: 26.10.2016
(73) Patentinhaber: Wagner, Jürgen, 67159 Friedelsheim (DE)
(72) Erfinder: Wagner, Jürgen, 67159 Friedelsheim (DE)
(74) Vertreter: Müller, Jochen
(86) Internationale Anmeldenummer: PCT/DE2014/100431
(87) Internationale Veröffentlichungsnummer: WO 2015/090272

(56) Entgegenhaltungen:
- EP-A2- 0 340 446
- WO-A2-03/073833
- DE-A1- 10 251 985
- DE-A1- 10 310 248

## Beschreibung

Die Erfindung bezieht sich auf eine Pflanzmaschine zum Setzen von Pflanzen, insbesondere Reben, und/oder Pflanzstäben in Reihenkulturen mit einer rechnergestützten Steuereinheit, die mit mindestens einem Lagesensor und einem Geschwindigkeitssensor zur Erfassung von Lage- und Geschwindigkeitsdaten verbunden ist, und mindestens einem Greifer, der an einem Greiferstab angeordnete Greiferfinger zum wurzelnahen Erfassen der Pflanze und/oder des Pflanzstabs umfasst, wobei der Greiferstab in radialer Ausrichtung an einem drehbar angetriebenen Greiferrad befestigt ist und ein Verfahren zum Betreiben einer Pflanzmaschine.

Aus der EP 340 446 A1 ist eine verfahrbare Pflanzmaschine bekannt, mit der ein Weinberg angelegt werden kann, d. h. Jungreben, vorzugsweise zusammen mit einem provisorischen Stützstab in Reihen gepflanzt werden. Bei dieser Pflanzmaschine werden die Setzlinge gemeinsam mit dem zugeordneten Stab in einen Förderapparat eingelegt, der sie fortlaufend mit gleichmäßigem Pflanzabstand in einen mittels einer keilförmigen Schar gefertigten Graben einbringt, der unmittelbar nach dem Pflanzen durch beischieben und andrücken des Erdreichs wieder verschlossen wird. Die Pflanzmaschine ist zum Anbau an einen Ackerschlepper ausgebildet und umfasst einen Hauptrahmen mit parallel zur Pflanzrichtung umlaufenden Greifern für die Setzlinge. Die Greifer werden in geöffneter Stellung zur Übergabe eines Setzlings an einer Abgabestation vorbeigeführt, um sich anschließend zu schließen und den Setzling abwärts in den Pflanzgraben bringen.

Im Weiteren ist aus der Praxis ein sogenanntes Kreispflanzsystem bekannt, mit dem Pflanzen punktgenau, auch in Querlinie, in den Boden gesetzt werden, wobei vorzugsweise eine Satellitensteuerung zur Anwendung kommt. Das Kreispflanzsystem umfasst beispielsweise sechs einem Greiferrad zugeordnete Greifer, die jeweils mit einem Greiferstab mit endseitigen Greiferfingern für die Pflanzen versehen sind, wobei die Greifer in Abhängigkeit der Fahrgeschwindigkeit der Pflanzmaschine und des vorgesehenen Pflanzabstandes langsamer oder schneller umlaufen. Die Umlaufgeschwindigkeit der Pflanzengreifer muss dabei langsamer als die Verfahrgeschwindigkeit der an einem Zugfahrzeug befestigten Pflanzmaschine sein, an der eine unterseitige Schar eine Furche im Boden erzeugt, in die die zu setzende Pflanze eingesetzt wird.

Da die Umlaufgeschwindigkeit der Greifer langsamer als die Vorwärtsbewegung der Pflanzmaschine ist, kommt die Pflanze mit und ohne Stab etwas schräg aus dem Schar, um sich dann durch den langsameren Ablauf kurz vor der Vertikalen aufrecht zu stellen. Gleichzeitig mit dem Erreichen der vertikalen Stellung wird die Pflanze angedrückt und zwangsgesteuert von dem Greifer freigegeben. Dieses Kreispflanzsystem ist insofern nachteilig, als der Boden, in den die Pflanze gesetzt wird, relativ porös sein muss, damit er hinter dem Schar in die Pflanzfurche einfließt, um die Wurzel der Pflanze zu umschließen. Wird die Pflanzmaschine an einem Hang aufwärts verfahren, fließt der Boden in Abhängigkeit von seinem Zustand erst in der Regel ein Stück hinter der Schar in die Pflanzfurche. Das bekannte Kreispflanzsystem gibt zu früh die Pflanze bzw. den damit verbundenen Stab frei, nämlich bevor diese beidseitig komplett angedrückt sind. Durch die Kreisbewegung des Pflanzsystems ist es nicht möglich, die Pflanze bzw. den Stab solange zu führen, bis sie vollends angedrückt sind.

Mit den aus der Praxis bekannten Pflanzmaschinen ist es möglich, geradlinig verlaufende Pflanzreihen, z. B. Rebzeilen, anzulegen in denen die Setzlinge gleichmäßig zueinander beabstandet sind. Zur Bestimmung des genauen Pflanzorts sind die Pflanzmaschinen mit einem Satellitennavigationssystem ausgestattet, z. B. GPS (global positioning system).

Die WO 03/073 833 A2 offenbart eine Pflanzmaschine nach dem Oberbegriff des Anspruchs 1 sowie ein Verfahren nach dem Oberbegriff des Anspruchs 11. Es beschreibt eine Vorrichtung zum Anlegen von Reihenpflanzungen, mit einem Hauptrahmen, der mit einer Einrichtung zum Neigungsausgleich und einer Schar zum Ausheben eines Pflanzgrabens ausgestattet ist. Im Weiteren ist innerhalb des Hauptrahmens eine mechanische Pflanzvorrichtung zur Einbringung von Setzlingen in den Pflanzgraben angeordnet die als ein um eine Achse quer zur Fortbewegungsrichtung geschwindigkeitsgesteuert drehbares, in die Schar teilweise eintauchendes Pflanz- oder Greiferrad ausgebildet ist, das auf seinem Umfang in radialer Richtung mehrere sternförmig angeordnete Greifer oder Greiferpaare trägt, die drehwinkelabhängig in eine Offen- und eine Schließstellung gebracht werden, wobei mindestens ein Greifer für Pflanzgut angeordnet ist. Zum positionsgenauen Setzen der Pflanzen arbeitet eine GPS-Steuerung vorgesehen, deren Daten zur Steuerung der Arbeitsgeschwindigkeit der Pflanzvorrichtung und des Orts der Pflanzung genutzt werden. Im Weiteren wird eine Lageabweichung des Hauptrahmens von der Waagrechten über mindestens einen Sensor ermittelt und gegebenenfalls korrigiert. Darüber hinaus ist der Hauptrahmen um seine Längsachse drehbeweglich angeordnet. Aus der DE 102 51 985 A1 oder der DE 103 10 248 A1 ist es bekannt einen Hauptrahmen einer Pflanzvorrichtung in einer bestimmten Lage zu Untergrund auszurichten. Im Weiteren kann die Drehbewegung des Pflanzrads bei einer Änderung der Längsneigung soweit verzögert oder beschleunigt werden, dass der Drehwinkel des Pflanzrads, bei dem die Freigabe des Pflanzguts erfolgt, stets einen den gegenüber der lotrechten Richtung vorgegebenen konstanten Wert erreicht. Es kann aber auch so verfahren werden, dass der Augenblick der Freigabe eines Setzlings oder eines gleichzeitig einzubringenden Pflanzstabs von der eigentlichen Pflanzvorrichtung diskontinuierlich gesteuert wird, d.h. stets in dem Augenblick erfolgt, an dem sich der Greifer in der richtigen Stellung zur Erdoberfläche befindet.

Damit die Setzlinge nach der Pflanzung in einer beliebigen definierten Winkelstellung relativ zum Untergrund, insbesondere, lotrecht und in einer Reihe stehen, auch wenn die Pflanzung in Hanglage angelegt wird und das Antriebsaggregat, also beispielsweise der Ackerschlepper, dabei seitlich geneigt ist, ist es bekannt, unterschiedliche Sensoren anzuordnen und anhand von deren Signalen einen Maschinenrahmen der Pflanzmaschine zu verschwenken, damit die Setzlinge entsprechend in den Untergrund eingebracht werden.

Der Erfindung liegt die Aufgabe zugrunde, eine Pflanzmaschine und ein Verfahren zum Betreiben der Pflanzmaschine der eingangs genannten Art zu schaffen, die bzw. das eine lotrechte Pflanzung mit einer verhältnismäßig hohen Genauigkeit sicherstellt, wobei die Pflanze und der Pflanzstab die lotrechte Lage beibehalten, bis der Pflanzvorgang abgeschlossen ist, sich die Wurzel also in der normalerweise beidseitig angedrückten Erde befindet.

Erfindungsgemäß wird die Aufgabe durch die Merkmale der unabhängigen Ansprüche gelöst.

Die Unteransprüche stellen vorteilhafte Ausgestaltungen der Erfindung dar.

Eine Pflanzmaschine zum Setzen von Pflanzen, insbesondere Reben, und/oder Pflanzstäben in Reihenkulturen umfasst eine rechnergestützte Steuereinheit, die mit mindestens einem Lagesensor und einem Geschwindigkeitssensor zur Erfassung von Lage- und Geschwindigkeitsdaten verbunden ist, und mindestens einem Greifer, der an einem Greiferstab angeordnete Greiferfinger zum wurzelnahen Erfassen der Pflanze und/oder des Pflanzstabs umfasst, wobei der Greiferstab in radialer Ausrichtung an einem drehbar angetriebenen Greiferrad befestigt ist. Die Rotation des Greiferrades ist bei Erreichen einer vertikalen Lage des Greifers stoppbar und
- das Greiferrad ist in einer an die Fahrgeschwindigkeit der Pflanzmaschine angepassten Geschwindigkeit linear verschiebbar an einem Träger eines Maschinenrahmens gelagert und/oder
- ein Betätiger ist zum zwangsweisen Öffnen der Greiferfinger verstellbar an dem Maschinenrahmen gelagert.

Die Pflanzmaschine lässt sich im Wesentlichen mittels der durch die Steuereinheit verarbeiteten Lage- und Geschwindigkeitsdaten an das Gelände und den Setzabstand anpassen, wie es aus dem Stand der Technik bekannt ist. Befindet sich ein Greifer, der in der Drehbewegung des Greiferrades die zu setzende Pflanze sowie den in der Regel mit der Pflanze verbundenen Pflanzstab, der über die Wurzeln der Pflanze nach unten vorsteht, erfasst und transportiert, in einer Lage, in der die Pflanze im Wesentlichen lotrecht ausgerichtet ist und in den Boden eingebracht werden soll, wird die Drehbewegung bis zum Stillstand verlangsamt werden und die Greiferfinger des Greifers werden mittels des Betätigers, der beweglich oder ortsfest an dem Maschinenrahmen festgelegt sein kann, zwangsweise geöffnet. Diese Vorgehensweise, bei der Greiferstäbe quasi in der Lotrechten auspendeln und unmittelbar von dem Betätiger geöffnet werden, ist bevorzugt beim Pflanzen in einem relativ porösen und leichten Boden anwendbar, insbesondere bei einem horizontalen oder flach geneigten Gelände. Es ist auch möglich, dass das Greiferrad in einer an die Fahrgeschwindigkeit der Pflanzmaschine angepassten Geschwindigkeit linear an dem Träger verschoben wird, wenn der mit der zu setzenden Pflanze bestückte Greifer im Wesentlichen lotrecht ausgerichtet und die Drehbewegung des Greiferrades bis zum Stillstand verlangsamt ist. Aufgrund der linearen Verschiebung behalten die Pflanze und der Pflanzstab die lotrechte Lage bei, bis der Pflanzvorgang abgeschlossen ist, sich die Wurzel also in der normalerweise beidseitig angedrückten Erde befindet. Auch beim Verschieben des Greiferrades ist es möglich, am Ende des Verschiebeweges oder in einer beliebigen Lage an dem Träger den Betätiger zum Öffnen der Greiferfinger zum Einsatz zu bringen, wobei der Betätiger wiederum ortsfest oder in seiner Lage verstellbar dem Maschinenrahmen zugeordnet ist. Bei einer positiven Neigung des Geländes, also bergauf, kommt der Betätiger gegenüber einem ebenen Gelände später zum Einsatz, indem er in Fahrtrichtung an dem Maschinenrahmen nach hinten verlagert wird und bei einer negativen Neigung des Geländes, also in Fahrtrichtung bergab, kommt der Betätiger gegenüber einem ebenen Gelände früher zum Einsatz, indem er entgegen der Fahrtrichtung an dem Maschinenrahmen nach vorne verlagert wird. Die lineare Verschiebung des Greiferrades und/oder des Betätigers kann auch bei ungünstigen Bodenbedingungen erfolgen, wenn der Boden beispielsweise schwer ist und nicht leicht in die Pflanzfurche rieselt, weshalb die Pflanze insbesondere mit einem Pflanzstab relativ lange Zeit geführt werden sollte, oder die Pflanzfurche aufgrund eines sehr rieselfähigen Bodens schnell verschlossen wird, wodurch ein relativ frühes Öffnen der Greiferfinger möglich ist. Die Lotrechte kann der Greifer gewichtsgesteuert einnehmen, indem er einfach pendelnd mechanisch aufgehängt ist oder er wird durch entsprechende Stelleinrichtungen entweder unmittelbar oder durch ein Verlagern von Komponenten der Pflanzmaschine zwangsgesteuert verlagert, wobei die Stelleinrichtungen mittels Daten eines Neigungssensors zu steuern sind.

Damit die Pflanzen bzw. Pflanzstäbe nach dem Öffnen der Greiferfinger freigegeben sind, sind die Greiferfinger entgegen der Fahrtrichtung ausgerichtet.

Zum Freigeben der Pflanzen bzw. Pflanzstäbe ist den Greifern der Betätiger zum zwangsweisen Öffnen der Greiferfinger zugeordnet. Um den Zeitpunkt der Freigabe zu variieren, ist der Betätiger verstellbar an dem Maschinenrahmen angeordnet. Beispielsweise ist der Betätiger als ein Öffnungsblech ausgebildet, das mittels mindestens eines ersten Hydraulikzylinders um eine Welle des Greiferrades verschwenkbar und zum Öffnen der Greiferfinger ansteuerbar ist. Selbstverständlich können auch zwei Hydraulikzylinder vorgesehen sein, von denen ein erster Hydraulikzylinder zum Verschwenken bzw. Positionieren des Betätigers und ein zweiter Hydraulikzylinder zum Ansteuern des Öffnungsblechs zum Öffnen der Greiferfinger dient.

In Ausgestaltung ist der zum zwangsweisen Öffnen der Greiferfinger angeordnete Betätiger als ein Öffnungsblech ausgebildet, das mittels eines Stellantriebs und/oder eines Hydraulikzylinders verlagerbar ist. Zweckmäßigerweise stehen der Stellantrieb und/oder dem Hydraulikzylinder zugeordnete Ventile mit der Steuereinheit in Verbindung. Der Stellantrieb kann beispielsweise als ein elektrischer Stellmotor ausgebildet sein und wird zur lageabhängigen Positionierung des Betätigers verwendet, während der Hydraulikzylinder zur Ausführung des eigentlichen Öffnungsvorgangs den Betätiger verlagert. An der Steuereinheit liegen alle relevanten Informationen, insbesondere Geschwindigkeitsdaten und Daten des Neigungssensors an, die entsprechend verarbeitet, zur exakten Verlagerung des Betätigers dienen, damit die Greiferfinger zu einem Zeitpunkt geöffnet werden, zu dem sich die Pflanze bzw. der Pflanzstab in der vertikalen Position befinden.

Durch ein Verstellen des Betätigers, der in Form eines eine Federmechanik der Greiferfinger beaufschlagenden Blechs oder Flacheisens ausgebildet sein kann, in Fahrtrichtung oder entgegen der Fahrtrichtung entlang dem Träger, kann ein Öffnen der Greiferfinger früher oder später erfolgen, die Pflanze also weniger lang oder länger während des Einsetzens in den Boden geführt werden. Beispielsweise können die Greiferfinger so lange geöffnet bleiben, wie sich der Betätiger in Eingriff befindet. Es ist auch möglich, die Greiferfinger mittels des Betätigers verrastend zu öffnen.

Zur Realisierung des Linearantriebs des Greiferrades ist das Greiferrad mittels eines doppelwirkenden Hydraulikzylinders an dem Träger verschiebbar. Der doppelt wirkende Hydraulikzylinder bewirkt eine Verschiebung des Greiferrades aus seiner Anfangslage entgegen der Fahrtrichtung bis in die Endlage, in der die Pflanzen bzw. Pflanzstäbe freigegeben werden, und wieder in die Ausgangslage zurück.

Nach einer Weiterbildung sind ein mit dem Greiferrad verbundener Rotationsantrieb, ein Stellventil für den doppelwirkenden Hydraulikzylinder und/oder ein Stellantrieb für den Betätiger mit der Steuereinheit gekoppelt. Die Aufnahme der Pflanzen, deren Transport während des Einpflanzens sowie das abschließende Freigeben der Pflanze werden mittels der an der Steuereinrichtung anliegenden und von dieser verarbeiteten Ist-Daten gesteuert.

Zweckmäßigerweise ist der Maschinenrahmen unterseitig mit einer Schar zur Herstellung einer Pflanzfurche in einem Untergrund, mit Andrückrollen zum Schließen der Pflanzfurche und/oder mindestens einem an seinem zu einem Zugfahrzeug entfernten Ende mit einem Stützrad versehen. Das Schar kann beispielsweise zweiteilig ausgebildet sein und den Boden beidseitig aufwerfen, wobei die zu setzende Pflanze in der Mitte der Schar durch diese hindurch mit ihrer Wurzel in die Pflanzfurche geführt wird. Anschließend wird der beidseitig aufgehäufelte Boden mittels der Andruckrollen an die Wurzel in der Pflanzfurche angedrückt. Das Stützrad kann motorisch höhenverstellbar sein und der Ausrichtung des Maschinenrahmens zu dem Boden dienen. In weiterer Ausgestaltung ist der Maschinenrahmen in seinem an ein Zugfahrzeug angehängten Zustand mittels Stellmitteln gegenüber einem Untergrund in seiner Höhe, Neigung und/oder um eine Längsachse drehbar.

Vorzugsweise trägt der Maschinenrahmen eine dem Greiferrad vorgeordnete Übergabestation, die Auflagen für die ausgerichteten Pflanzen und/oder die Pflanzstäbe zum definierten Ergreifen durch die geöffneten Greiferfinger umfasst, die nach dem Ergreifen an der Übergabestation zwangsweise schließbar sind. Die Übergabestation wird mit Pflanzen mit daran festigten Pflanzstäben durch Bedienpersonal bestückt, wobei die Übergabestation die Auflagen umfasst, auf die die Pflanzen mit den Pflanzstäben ausgerichtet aufgelegt werden. Das Öffnen und/oder Schließen der Greiferfinger kann durch einen einen Federmechanismus beaufschlagenden Auslöser erfolgen, der den Federmechanismus dauerhaft beaufschlagt, um die Greiferfinger offen zu halten, wobei sich die Greiferfinger schließen, sobald der Auslöser außer Eingriff ist.

Vorteilhafterweise ist die Steuereinheit mit einem Satellitennavigationssystem zur Erfassung von Ist-Ortsdaten und Ist-Geschwindig-keitsdaten gekoppelt. Durch das Satellitennavigationssystem lässt sich auch das zu bepflanzende Grundstück vermessen und für die entsprechenden Pflanzabstände einzuteilen, sodass der Pflanzvorgang bei einem Fahren in beide Richtungen durchgeführt werden kann und die Pflanzen punktgenau platziert werden, sodass kreuzförmige Freiräume zwischen den Pflanzen vorhanden sind. Mittels des Satellitennavigationssystems können auch bevorzugte Ausrichtungen der Pflanzreihen berechnet und bepflanzt werden.

Bei einem Verfahren zum Betreiben einer Pflanzmaschine zum Setzen von Pflanzen, insbesondere Reben, in Reihenkulturen, und/oder Pflanzstäben, ergreift ein an einem rotierend angetriebenen Greiferrad angeordneter Greifer eine Pflanze und/oder einen zugeordneten Pflanzstab, die Rotation des Greiferrades wird bei Erreichen einer vertikalen Lage des Greifers gestoppt und das Greiferrad linear verschoben.

Durch die Linearverschiebung des Greiferrades wird die Pflanze während des Andrückens des Bodens während eines relativ langen Zeitraums gehalten, sodass ein positions- und lagegenaues Setzen der Pflanze, gegebenenfalls mit einem Pflanzstab, auch unter schlechten Umgebungsbedingungen, wie beispielsweise einem nassen Boden, aufgrund ausreichend vorhandener Zeit, sichergestellt ist.

Vorzugsweise wird ein Maschinenrahmen anhand von Daten eines Satellitennavigationssystems permanent in der Lage verändert, damit der Greifer in eine Lage zum lotrechten Setzen der Pflanze bringbar ist. In dieser Lage wird die Pflanze während des Andrückens des Bodens durch die lineare Bewegung des Greiferrades gehalten.

Zweckmäßigerweise wird der Antrieb des Greiferrades an eine Fahrgeschwindigkeit angepasst, um das lotrechte Pflanzen zu unterstützen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:
- Fig. 1: eine vereinfachte perspektivische Darstellung der erfindungsgemäßen Pflanzmaschine und

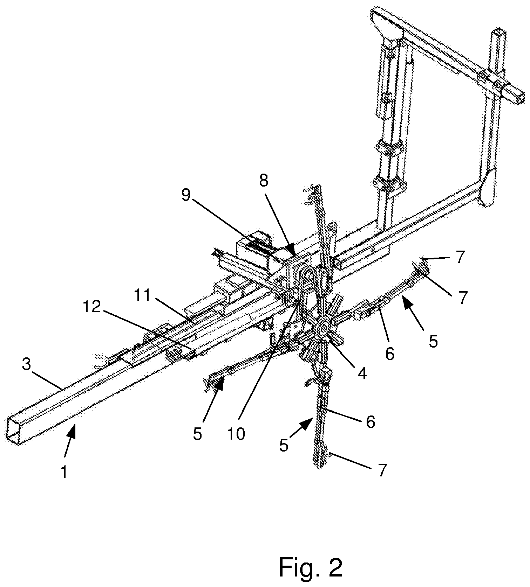

- Fig. 2: eine vereinfachte perspektivische Darstellung der Pflanzmaschine nach Fig. 1 in alternativer Ausgestaltung.
- Fig. 3: eine vereinfachte perspektivische Darstellung der Pflanzmaschine nach Fig. 1 in weiterer alternativer Ausgestaltung.

Die Pflanzmaschine umfasst im Wesentlichen einen Maschinenrahmen 1, der zum Anhängen an ein Zugfahrzeug ausgebildet ist und an dem zum Zugfahrzeug entfernten Ende eine Aufnahme 2 für ein nicht dargestelltes Stützrad aufweist. An einem Träger 3 des Maschinenrahmens 1, der sich in Fahrtrichtung erstreckt, ist ein Greiferrad 4 angeordnet, das zur Aufnahme von maximal zwölf Greifern 5, die jeweils einen mit dem Greiferrad 4 verbundenen Greiferstab 6 und endseitige Greiferfinger 7 zum wurzelnahen Erfassen einer Pflanze, gegebenenfalls mit zugeordnetem Pflanzstab, umfassen. Den entgegen der Fahrtrichtung ausgerichteten Greiferfingern 7 ist eine nicht näher dargestellte Federmechanik im Greiferstab 6 zugeordnet, die Greiferfinger 7 in einer geschlossenen Stellung hält, wenn sie nicht zum Öffnen beaufschlagt ist.

Das Greiferrad 4 steht mit einem Rotationsantrieb 8 in Verbindung, der vorliegend als ein einen Motor 9 aufweisender Riemen- oder Kettentrieb 10 ausgebildet ist, wobei der Motor 9 mit einer nicht dargestellten rechnergestützten Steuereinheit gekoppelt ist, die eine Drehgeschwindigkeit des Motors und damit die Umlaufgeschwindigkeit der mit dem Greiferrad 4 verbundenen Greifer 5 bestimmt bzw. steuert.

Im Weiteren ist das Greiferrad 4 zu seiner linearen Verschiebung entlang des Trägers 3 auf einem trägerseitig geführten Schlitten 11 mit einem doppelwirkenden Hydraulikzylinder 12 verbunden, der zum einen an dem Träger 3 und zum anderen an dem das Greiferrad 4 tragenden Schlitten 11 befestigt ist und durch ein mit der Steuereinheit gekoppeltes Stellventil angesteuert ist, um das Greiferrad 4 hin und her zu verschieben. Diese Verschiebung ist beispielsweise erforderlich, um in nassen, scholligen bzw. steinigen Böden die Pflanze mit ihren Wurzeln und/oder den der Pflanze zugeordneten Pflanzstab in die von der Schar gefertigte Pflanzrille einzuführen und anschließend die Pflanzrille zu schließen und den Boden zu verfestigen.

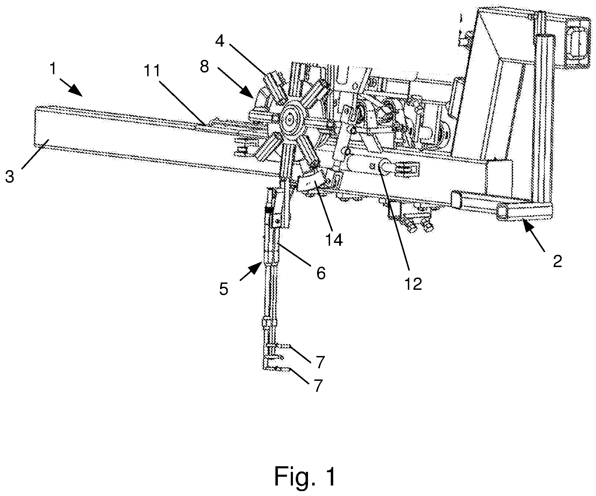

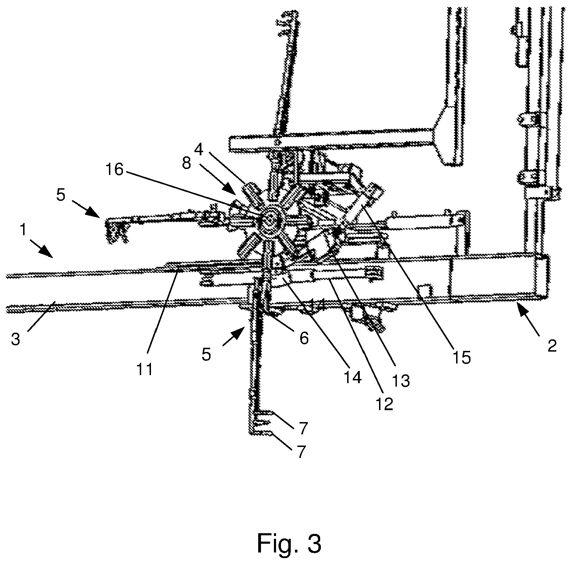

Zur Beaufschlagung der Federmechanik zum Öffnen der Greiferfinger 7 der Greifer 4 ist gemäß Fig. 1 ein als Öffnungsblech ausgebildeter Betätiger 14 an dem Träger 3 befestigt. Der Betätiger 14 wird in einer gewünschten Position an dem Träger befestigt, wobei die Position zu Beginn des Pflanzvorgangs durch Probepflanzung ermittelt oder anhand von Erfahrungswerten festgelegt wird. Alternativ ist der Betätiger 14 gemäß Fig. 3 mittels eines Stellantriebs 13, beispielsweise eine elektrischen Stellmotors, verstellbar, beispielsweise um eine Welle 16 des Greiferrades 4 verdrehbar, und mittels eines Hydraulikzylinders 15 zum Öffnen der Greiferfinger 7 ansteuerbar. Der Stellantrieb 13 ordnet des Betätiger, auch in einem beliebigen Gelände anhand Daten eines Neigungssensors, in unmittelbarer Nähe des in einer Setzposition zu beaufschlagenden Greifer 5 an, um ein schnelles Öffnen der Greiferfinger 7 durch die Verlagerung mittels des Hydraulikzylinders 15 sicherzustellen. Der Stellantrieb 13 und dem Hydraulikzylinder 15 zugeordnete Ventile stehen mit der Steuereinheit in Verbindung, um die Greiferfinger 7 anhand an der Steuereinheit anliegender Daten, die die Neigung des Geländes, die Ausrichtung des Greifers 5 und/oder die Position relativ zu Grundstücksgrenzen oder in absoluten Koordinaten beschreiben, zu öffnen. Mit dem verlagerbaren Betätiger 14 ist insbesondere ein positionsgenaues Pflanzen möglich, wenn das Greiferrad 4 nicht linear an dem Träger 4 verschoben wird. Die Verwendung ist aber selbstverständlich auch bei der Verschiebung des Greiferrades 4 möglich.

Unterseitig ist der Maschinenrahmen 1 mit einer zweiteiligen Schar zur Fertigung einer Pflanzfurche für die Wurzeln der zu setzenden Pflanzen in dem Boden versehen, wobei die an dem zugeordneten Greifer 4 gehaltene Pflanze zwischen der Schar hindurchgeführt wird. Das Beidrücken des Bodens an die Wurzeln erfolgt entweder mittels einer weiteren Schar oder Andrückrollen, die ebenfalls an dem Maschinenrahmen 1 zu lagern sind. Zur Höhenverstellung des Maschinenrahmens 1 sind mehrere Räder teleskopierbar angeordnet, wobei die Teleskopeinrichtung mit der Steuereinheit verbundene hydraulische Zylinder-/ Kolbeneinheiten umfasst. Im Weiteren ist die Pflanzvorrichtung um die Längsachse des Trägers 4 verdrehbar.

Zum Beschicken der Greifer 5 ist zwischen dem Zugfahrzeug und dem Greiferrad 4 eine Übergabestation mit an die Pflanzen und die Pflanzstäbe angepassten Auflagen vorgesehen, die von Bedienpersonal bestückt werden und denen ein Auslöser zum zwangsweisen Öffnen der Greiferfinger 7 zugeordnet ist.

Zum lotrechten Setzen der Pflanzen sind dem Maschinenrahmen 1 und/oder den Greifern 5 Neigungssensoren zugeordnet, die mit der Steuereinheit in Verbindung stehen, wobei die Steuereinheit auch Daten zur Fahrgeschwindigkeit der Pflanzvorrichtung von geeigneten Sensoren empfängt. Insbesondere ist die Steuereinheit mit einem Satellitennavigationssystem gekoppelt und berechnet anhand der anliegenden Ist-Daten die Pflanzabstände bzw. die Koordinaten, mit denen eine Pflanze in den Boden gesetzt werden soll. Im Weiteren wird die die Lage der Pflanzmaschine sowie der Greifer 5 zu dem Boden, erfasst und automatisch derart eingestellt, dass die Pflanzen lotrecht ausgerichtet gepflanzt werden. Hierzu wird auch der Antrieb des Greiferrades 4 an eine Ist-Fahrgeschwindigkeit bzw. einen Soll-Pflanzabstand angepasst.

Im Arbeitsablauf entnimmt ein Greifer 5 in einer Rotationsbewegung des Greiferrades 4, die an die Ist-Fahrgeschwindigkeit und den Soll-Pflanzabstand angepasst ist, die Pflanze mit dem zugeordneten Pflanzstab der Auflage der Übergabestation und bringt diese in einer weiteren Drehbewegung in eine von einem Neigungssensor überwachte oder ausgependelte lotrechte Lage, in der der Rotationsantrieb 8 gestoppt und der Linearantrieb durch eine Druckbeaufschlagung des entsprechenden Hydraulikzylinders 12 gestartet wird. Hierbei befindet sich die Wurzel der Pflanze in der Schar sowie der geschaffenen Pflanzfurche und der Pflanzstab wird in den Boden eingedrückt, während die Wurzeln die Scharsohle erreichen. Während der Linearbewegung werden die Wurzeln der Pflanze in die Erde eingebettet und der Pflanzstab gehalten, sodass die lotrechte Lage der Pflanze beibehalten wird. Zum Freigeben der Pflanze und des Pflanzstabes durch das Öffnen der Greiferfinger 7 kommt der Betätiger 14 am Ende der Linearbewegung zum Einsatz. Hat das Greiferrad 4 seine Endlage an dem Träger 3 erreicht und die Greiferfinger 7 sind geöffnet, wird das Greiferrad 4 wieder in Drehbewegung versetzt sowie in Richtung des Zugfahrzeugs verschoben und der nächste Greifer 5 entnimmt die bereitliegende Pflanze mit zugeordnetem Pflanzstab.

Die Kraft, mit der die Pflanzstäbe eingedrückt werden, kann begrenzt werden, um eine Beschädigung der Pflanzstäbe zu verhindern, beispielsweise durch einen mit der Steuereinheit verbundenen Drucksensor oder eine gefederte Aufhängung. Es versteht sich für den Fachmann, dass der Pflanzstab nur im Zusammenhang mit bestimmten Pflanzen verwendet wird und die Greifer 5 an das Pflanzgut angepasst sind.

Damit die Pflanzen in der notwendigen Tiefe eingesetzt werden können, müssen die Wurzeln eine Tiefe in der Pflanzfurche erreichen, die der Scharsohle, also der Tiefe des Schar, entspricht, und zwar bevor Erde in die Pflanzfurche einfließt. Wird auf einem geneigten Grundstück in einer Richtung bergab gepflanzt, kann bei einer fließfähigen trockenen Erde zu viel Erde von hinten in das Schar laufen und die Pflanzen werden nur dann tief genug in die Pflanzfurche gesetzt, wenn sich das Greiferrad 4 soweit vorne, also in Richtung des Zugfahrzeugs verschoben, befindet, dass die Wurzeln der Pflanze vor den Einfließen der Erde in die Pflanzfurche die Scharsohle erreichen.

Fließt aber relativ wenig Erde direkt hinter dem Schar in die Pflanzfurche, was beim Pflanzen bergauf oder bei einem nassen und schweren Boden erfolgen kann, ist es vorteilhaft die Linearbewegung des Greiferrades 4 relativ spät einsetzen zu lassen, damit die Erde an die Wurzel geführt werden kann, bzw. das Greiferrad 4 wird nach hinten, also entgegen der Richtung des Zugfahrzeugs verschoben.

### Bezugszeichen

- 1.: Maschinenrahmen
- 2.: Aufnahme
- 3.: Träger
- 4.: Greiferrad
- 5.: Greifer
- 6.: Greiferstab
- 7.: Greiferfinger
- 8.: Rotationsantrieb von 4
- 9.: Motor
- 10.: Riementrieb
- 11.: Schlitten
- 12.: Hydraulikzylinder
- 13.: Stellantrieb
- 14.: Betätiger
- 15.: Hydraulikzylinder
- 16.: Welle

## Patentansprüche

1. Pflanzmaschine zum Setzen von Pflanzen, insbesondere Reben, und/oder Pflanzstäben in Reihenkulturen mit einer rechnergestützten Steuereinheit, die mit mindestens einem Lagesensor und einem Geschwindigkeitssensor zur Erfassung von Lage- und Geschwindigkeitsdaten verbunden ist, und mindestens einem Greifer (5), der an einem Greiferstab (6) angeordnete Greiferfinger (7) zum wurzelnahen Erfassen der Pflanze umfasst, wobei der Greiferstab (6) in radialer Ausrichtung an einem drehbar angetriebenen Greiferrad (4) befestigt ist, **dadurch gekennzeichnet, dass** die Pflanzmaschine derart konfiguriert ist, dass die Rotation des Greiferrades (4) bei Erreichen einer vertikalen Lage des Greifers (5) stoppbar und
• das Greiferrad (4) in einer an die Fahrgeschwindigkeit der Pflanzmaschine angepassten Geschwindigkeit linear verschiebbar an einem Träger (3) eines Maschinenrahmens (1) gelagert und/oder
• ein Betätiger (14) zum zwangsweisen Öffnen der Greiferfinger (7) verstellbar an dem Maschinenrahmen (1) gelagert ist.

2. Pflanzmaschine nach Anspruch 1, **dadurch gekennzeichnet, dass** die Greiferfinger (7) entgegen der Fahrtrichtung ausgerichtet sind.

3. Pflanzmaschine nach Anspruch 1 oder 2, **dadurch gekennzeichnet, dass** der zum zwangsweisen Öffnen der Greiferfinger (7) angeordnete Betätiger (14) als ein Öffnungsblech ausgebildet ist, das mittels eines Stellantriebs (13) und/oder eines Hydraulikzylinders (15) verlagerbar ist.

4. Pflanzmaschine nach Anspruch 3, **dadurch gekennzeichnet, dass** der Stellantrieb (13) und/oder dem Hydraulikzylinder (15) zugeordnete Ventile mit der Steuereinheit in Verbindung stehen.

5. Pflanzmaschine nach Anspruch 1, **dadurch gekennzeichnet, dass** das Greiferrad (4) mittels eines doppelwirkenden Hydraulikzylinders (12) an dem Träger (3) verschiebbar ist.

6. Pflanzmaschine nach einem der Ansprüche 1 bis 5, **dadurch gekennzeichnet, dass** ein mit dem Greiferrad (4) verbundener Rotationsantrieb (8) und/oder ein Stellventil für den doppelwirkenden Hydraulikzylinder (12) mit der Steuereinheit gekoppelt sind.

7. Pflanzmaschine nach einem der Ansprüche 1 bis 6 **dadurch gekennzeichnet, dass** der Maschinenrahmen (1) unterseitig mit einer Schar zur Herstellung einer Pflanzfurche in einem Untergrund, mit Andrückrollen zum Schließen der Pflanzfurche und/oder mindestens einem an seinem zu einem Zugfahrzeug entfernten Ende mit einem Stützrad versehen ist.

8. Pflanzmaschine nach einem der Ansprüche 1 bis 7, **dadurch gekennzeichnet, dass** der Maschinenrahmen (1) in seinem an ein Zugfahrzeug angehängten Zustand mittels Stellmitteln gegenüber einem Untergrund in seiner Höhe, Neigung und/oder um eine Längsachse drehbar ist.

9. Pflanzmaschine nach einem der Ansprüche 1 bis 8, **dadurch gekennzeichnet, dass** der Maschinenrahmen (1) eine dem Greiferrad (4) vorgeordnete Übergabestation trägt, die Auflagen für die ausgerichteten Pflanzen und/oder die Pflanzstäbe zum definierten Ergreifen durch die geöffneten Greiferfinger (7) umfasst, die nach dem Ergreifen an der Übergabestation zwangsweise schließbar sind.

10. Pflanzmaschine nach einem der Ansprüche 1 bis 9, **dadurch gekennzeichnet, dass** die Steuereinheit mit einem Satellitennavigationssystem zur Erfassung von Ist-Ortsdaten und Ist-Geschwindigkeitsdaten gekoppelt ist.

11. Verfahren zum Betreiben einer Pflanzmaschine zum Setzen von Pflanzen, insbesondere Reben, in Reihenkulturen, und/oder Pflanzstäben, insbesondere nach Anspruch 1, wobei ein an einem rotierend angetriebenen Greiferrad (4) angeordnete Greifer (5) eine Pflanze und/oder einen zugeordneten Pflanzstab ergreift, **dadurch gekennzeichnet, dass** die Rotation des Greiferrades (4) bei Erreichen einer vertikalen Lage des Greifers (5) gestoppt und
• das Greiferrad (5) in einer an die Fahrgeschwindigkeit der Pflanzmaschine angepassten Geschwindigkeit linear verschoben und/oder
• ein Betätiger (14) zum zwangsweisen Öffnen der Greiferfinger (7) angesteuert wird.

12. Verfahren nach Anspruch 11, **dadurch gekennzeichnet, dass** ein Maschinenrahmen (1) anhand von Daten eines Satellitennavigationssystems permanent in der Lage verändert wird, damit der Greifer (5) in eine Lage zum lotrechten Setzen der Pflanze gebracht wird.

13. Verfahren nach Anspruch 11 oder 12, **dadurch gekennzeichnet, dass** der Antrieb des Greiferrades (4) an eine Fahrgeschwindigkeit angepasst wird.

## Claims

1. Planting machine for placing plants, in particular vines, and/or plant stakes in row cultures, having a computer-aided control unit, which is connected to at least one position sensor and a speed sensor for measuring position and speed data, and at least one gripper (5), which comprises gripper fingers (7) arranged on a gripper rod (6) for gripping the plants close to the root, the gripper rod (6) being fixed in a radial orientation to a rotatably driven gripper wheel (4), **characterized in that** the planting machine is configured in such a way that the rotation of the gripper wheel (4) can be stopped when a vertical position of the gripper (5) is reached, and
- the gripper wheel (4) is mounted on a carrier (3) of a machine frame (1) such that it can be displaced linearly at a speed matched to the speed of travel of the planting machine, and/or
- an actuator (14) for the forcible opening of the gripper fingers (7) is adjustably mounted on the machine frame (1).

2. Planting machine according to Claim 1, **characterized in that** the gripper fingers (7) are oriented counter to the direction of travel.

3. Planting machine according to Claim 1 or 2, **characterized in that** the actuator (14) provided for the forcible opening of the gripper fingers (7) is formed as an opening plate, which can be displaced by means of an actuating drive (13) and/or a hydraulic cylinder (15).

4. Planting machine according to Claim 3, **characterized in that** the actuating drive (13) and/or the hydraulic cylinder (15) is/are assigned valves connected to the control unit.

5. Planting machine according to Claim 1, **characterized in that** the gripper wheel (4) can be displaced on the carrier (3) by means of a double-acting hydraulic cylinder (12).

6. Planting machine according to one of Claims 1 to 5, **characterized in that** a rotational drive (8) connected to the gripper wheel (4), and/or an actuating valve for the double-acting hydraulic cylinder (12) is/are coupled to the control unit.

7. Planting machine according to one of Claims 1 to 6, **characterized in that** the machine frame (1) is provided on the underside with a ploughshare for producing a plant furrow in a ground, with pressure rollers for closing the plant furrow and/or with at least one supporting wheel at its end remote from a traction vehicle.

8. Planting machine according to one of Claims 1 to 7, **characterized in that** when it is attached to a traction vehicle, the machine frame (1) can be rotated by actuating means with respect to a ground in terms of its height, inclination and/or about a longitudinal axis.

9. Planting machine according to one of Claims 1 to 8, **characterized in that** the machine frame (1) carries a transfer station arranged upstream of the gripper wheel (4), which comprises supports for the aligned plants and/or the plant stakes for defined gripping by the open gripper fingers (7), which can be closed forcibly following the gripping at the transfer station.

10. Planting machine according to one of Claims 1 to 9, **characterized in that** the control unit is coupled to a satellite navigation system for the acquisition of current location data and current speed data.

11. Method for operating a planting machine for placing plants, in particular vines, in row cultures, and/or plant stakes, in particular according to Claim 1, a gripper (5) arranged on a gripper wheel (4) driven in rotation gripping a plant and/or an associated plant stake, **characterized in that** the rotation of the gripper wheel (4) is stopped when a vertical position of the gripper (5) is reached, and
• the gripper wheel (5) is displaced linearly at a speed matched to the speed of travel of the planting machine, and/or
• an actuator (14) for the forcible opening of the gripper fingers (7) is activated.

12. Method according to Claim 11, **characterized in that** a position of a machine frame (1) is changed permanently by using data from a satellite navigation system, in order that the gripper (5) is brought into a position for the vertical placement of the plant.

13. Method according to Claim 11 or 12, **characterized in that** the drive of the gripper wheel (4) is matched to a speed of travel.

## Revendications

1. Machine à planter pour disposer des plantes, en particulier des vignes, et/ou des tuteurs de plantes dans des cultures en rangées, comprenant une unité de commande assistée par ordinateur qui est connectée à au moins un capteur de position et un capteur de vitesse pour détecter des données de position et de vitesse, et au moins un dispositif de préhension (5) qui comprend des doigts de préhension (7) disposés au niveau d'une barre de préhension (6) pour saisir les plantes à proximité des racines, la barre de préhension (6) étant fixée dans une orientation radiale à une roue de préhension (4) entraînée en rotation, **caractérisée en ce que** la machine à planter est configurée de telle sorte que la rotation de la roue de préhension (4), à l'obtention d'une position verticale du dispositif de préhension (5) puisse être arrêtée et
- la roue de préhension (4) est supportée sur un support (3) d'un cadre de machine (1) de manière à pouvoir être déplacée linéairement à une vitesse adaptée à la vitesse de conduite de la machine à planter et/ou
- un dispositif d'actionnement (14) pour l'ouverture forcée des doigts de préhension (7) est supporté de manière déplaçable sur le cadre de machine (1).

2. Machine à planter selon la revendication 1, **caractérisée en ce que** les doigts de préhension (7) sont orientés dans le sens opposé à la direction de conduite.

3. Machine à planter selon la revendication 1 ou 2, **caractérisée en ce que** le dispositif d'actionnement (14) disposé en vue de l'ouverture forcée des doigts de préhension (7) est réalisé sous forme de tôle d'ouverture qui peut être déplacée au moyen d'un entraînement de commande (13) et/ou d'un vérin hydraulique (15).

4. Machine à planter selon la revendication 3, **caractérisée en ce que** des soupapes associées à l'entraînement de commande (13) et/ou au vérin hydraulique (15) sont en liaison avec l'unité de commande.

5. Machine à planter selon la revendication 1, **caractérisée en ce que** la roue de préhension (4) peut être déplacée au moyen d'un vérin hydraulique à double action (12) sur le support (3).

6. Machine à planter selon l'une quelconque des revendications 1 à 5, **caractérisée en ce qu'**un entraînement en rotation (8) associé à la roue de préhension (4) et/ou une soupape de commande pour le vérin hydraulique à double action (12) sont accouplés à l'unité de commande.

7. Machine à planter selon quelconque des revendications 1 à 6, **caractérisée en ce que** le cadre de machine (1) est pourvu, du côté inférieur, d'un soc pour réaliser un sillon de plantage dans un sol, avec des rouleaux de pressage pour fermer le sillon de plantage et/ou au moins une d'une roue de support à son extrémité éloignée d'un véhicule tracteur.

8. Machine à planter selon l'une quelconque des revendications 1 à 7, **caractérisée en ce que** le cadre de machine (1), dans son état attelé à un véhicule tracteur, peut tourner en hauteur, en inclinaison et/ou autour d'un axe longitudinal par rapport à un sol au moyen de moyens de commande.

9. Machine à planter selon l'une quelconque des revendications 1 à 8, **caractérisée en ce que** le cadre de machine (1) porte un poste de transfert placé avant la roue de préhension (4), qui comprend les supports pour les plantes alignées et/ou les tuteurs de plantes qui doivent être saisis de manière définie par les doigts de préhension ouverts (7) qui peuvent être fermés de manière forcée après la préhension au niveau du poste de transfert.

10. Machine à planter selon l'une quelconque des revendications 1 à 9, **caractérisée en ce que** l'unité de commande est accouplée à un système de navigation par satellite pour détecter des données locales en temps réel et des données de vitesse en temps réel.

11. Procédé pour faire fonctionner une machine à planter pour disposer des plantes, en particulier des vignes, et/ou des tuteurs de plantes dans des cultures en rangées, en particulier selon la revendication 1, un dispositif de préhension (5) disposé au niveau d'une roue de préhension (4) entraînée en rotation saisissant une plante et/ou un tuteur de plante associé, **caractérisé en ce que** la rotation de la roue de préhension (4) est arrêtée une fois atteinte une position verticale du dispositif de préhension (5), et
- la roue de préhension (5) est déplacée linéairement à une vitesse adaptée à la vitesse de conduite de la machine de plantage et/ou
- un dispositif d'actionnement (14) est commandé pour l'ouverture forcée des doigts de préhension (7).

12. Procédé selon la revendication 11, **caractérisé en ce que** la position d'un cadre de machine (1) est modifiée en permanence à l'aide de données d'un système de navigation par satellite afin que le dispositif de préhension (5) soit amené dans une position permettant de disposer les plantes verticalement.

13. Procédé selon la revendication 11 ou 12, **caractérisé en ce que** l'entraînement de la roue de préhension (4) est adapté à une vitesse de conduite.
